# EUROPEAN PATENT SPECIFICATION

(11) **EP 3 045 380 B1**
(45) Date of publication and mention of the grant of the patent: **22.08.2018**
(21) Application number: 15150910.6
(22) Date of filing: 13.01.2015
(51) Int. Cl.: B62D 25/16, B62D 25/18

(54) **Fastening support for mudguard**
Befestigungsvorrichtung für Kotflügel
Support de fixation pour garde-boue

(43) Date of publication of application: 20.07.2016
(73) Proprietor: Motoseal Components Oy, 26100 Rauma (FI)
(72) Inventor: Kallio, Reima, 26100 Rauma (FI)
(74) Representative: Kolster Oy Ab

(56) References cited:
- EP-A1- 0 694 466
- EP-A1- 0 827 895
- EP-A1- 1 043 217
- EP-A1- 1 659 048
- EP-A1- 2 666 702
- EP-A2- 1 493 651
- US-A1- 2007 273 122
- US-A1- 2012 080 908

## Description

### FIELD OF THE INVENTION

The invention relates to a fastening support for a mudguard.

### BACKGROUND OF THE INVENTION

A fastening support for a mudguard is used to enable the mudguard to be fastened to a hub of a turning wheel such that as the wheel turns at an angle smaller than a given turning angle, the mudguard turns along with the wheel accordingly. The fastening support comprises a flexible structure that allows, by means of a stop element, the mudguard being prevented from turning along with the wheel at an angle larger that the given turning angle and being returned to turn along with the wheel when the turning angle of the wheel is smaller than the aforementioned given turning angle. That kind of fastening support for the mudguard is disclosed for example in publications US 5074573, FR 2813847, EP 1481880, DE 3607000, EP 1043217, EP 2666702 A1, US 2012/080908 A1 and US 2007/0273122 A1.

### BRIEF DESCRIPTION OF THE INVENTION

An object of the present invention is to provide a novel fastening support for a mudguard.

The invention is characterized by the features of the independent claim.

Some embodiments of the invention are disclosed in the dependent claims.

The fastening support disclosed comprises a flexible structure that allows the mudguard being prevented from turning along with a wheel at an angle larger than a given turning angle and being returned to turn along with the wheel when the turning angle of the wheel is smaller than the aforementioned given turning angle. The fastening support comprises further a support element to be arranged fixedly in connection with a hub of the wheel to move therewith, which support element comprises a first turning support surface. Further the fastening support comprises a turning element arranged coaxially with the support element, which turning element comprises a second turning support surface arranged coaxially opposite the first turning support surface in the support element. The turning element and the second turning support surface therein and the support element and the first turning support surface therein are able to turn relative to each other when the wheel turns at an angle larger than the aforementioned given turning angle. Further the fastening support comprises a fastening element of the mudguard, which is supported to the turning element coaxially with the support element and the turning element and substantially immobile relative to the turning element in the turning direction of the turning element relative to the support element, the fastening element being arranged to turn along with the turning element relative to the support element coaxially with the turning element when the wheel turns at an angle larger than the aforementioned given turning angle.

An assembly or putting together of the fastening support disclosed, as well as a disassembly of the fastening support disclosed, is very simple and effective, because the support element, the turning element and the fastening element are coaxial, whereby they may be tightened together with only a single fastening or mounting operation.

### BRIEF DESCRIPTION OF THE DRAWINGS

In the following the invention will be described in greater detail by means of preferred embodiments with reference to the accompanying drawings, in which
Figure 1 is a schematic cross-sectional view showing a fastening support for a mudguard arranged in connection with a wheel and as seen from the direction of travel of a vehicle;
Figures 2a, 2b and 2c are schematic top views showing a mudguard arranged in connection with a wheel turned in different positions;
Figure 3 is a schematic view of a fastening support for a mudguard as seen obliquely from above;
Figure 4 is a schematic view of the fastening support of Figure 3 as seen obliquely from below;
Figure 5 is a schematic exploded view of a fastening support similar to that of Figure 3 as seen obliquely from above; and
Figure 6 is a schematic exploded view of the fastening support of Figure 5 as seen obliquely from below.

For the sake of clarity, the figures show some embodiments of the invention in a simplified manner. Like reference numerals identify like elements in the figures.

### DETAILED DESCRIPTION OF THE INVENTION

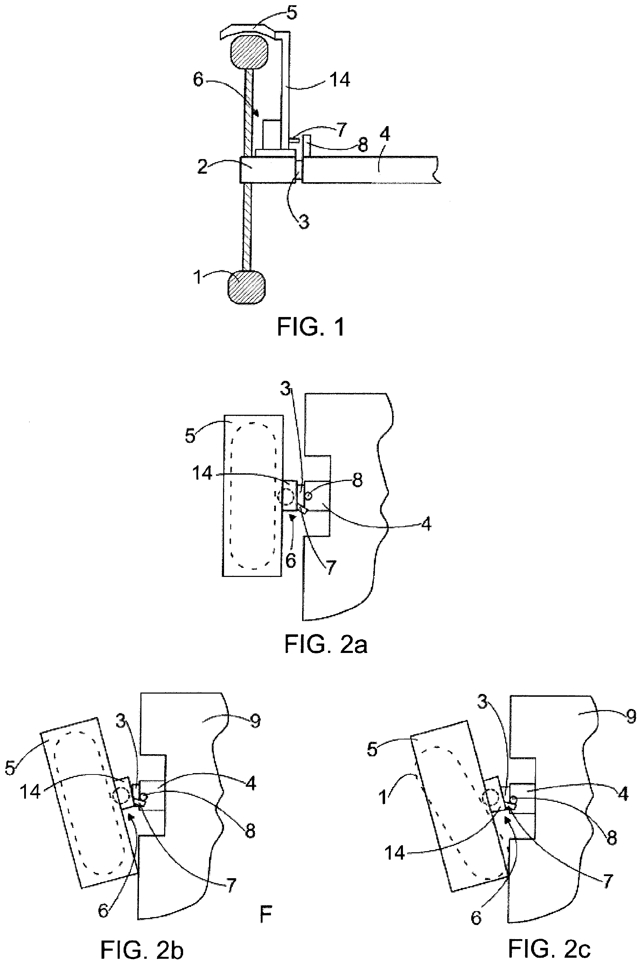

Figure 1 is a schematic cross-sectional view showing a wheel 1 as seen from the direction of travel of a vehicle. The wheel 1 is arranged to rotate about a hub 2. The hub 2 is connected through a joint 3 to a non-turning axle 4 so that the hub 2 and thus the wheel 1 are allowed to turn with respect to the axle 4.

In connection with the wheel 1 resides a mudguard 5, which is connected in connection with the hub 2 with a fastening support 6 of the mudguard 5 such that in a normal situation the mudguard 5 turns as the wheel 1 turns. Figure 2a shows a situation where the vehicle travels directly forward while Figure 2b shows a situation where the wheel 1 has been turned and the mudguard 5 has turned along with the wheel.

A fastening support 6 for the mudguard 5 comprises a flexible structure which allows the mudguard 5 to turn only a part of that maximum turning angle that the wheel 1 is allowed to turn between its extreme turning positions. The fastening support 6 for the mudguard 5 is provided with a stop pin 7 or another suitable stop element. When the wheel 1 is turned beyond a given angle, which is a maximum turning angle defined for the mudguard 5, the stop pin 7 collides with a fixed structure, such as a pin 8, provided in the vehicle. A collision occurs when the wheel 1 is turned to the extent shown in Figure 2b. When the wheel 1 is further turned according to Figure 2c, the stop pin 7 prevents the mudguard 5 from turning. In such a case, the flexible structure in the fastening support 6 yields and the mudguard 5 does not collide with the body of the vehicle 9. The vehicle 9 may be e.g. an agricultural tractor, a telescopic handler, a backhoe loader or a garden tractor or another vehicle equipped with turning wheels. When the mudguard 5 does not turn at a large turning angle along with the wheel 1, the vehicle 9 is prevented from being damaged. A part of the vehicle 9, such as a side panel of a tractor, might be damaged upon being hit by a mudguard. Furthermore, damage to the mudguard 5 is naturally also avoided.

The stop element, which prevents the mudguard 5 from turning along with the wheel 1 at an angle larger than the given turning angle, may also be provided by means of a part of the vehicle 9 and the mudguard 5. In this case, the mudguard 5 is thus allowed to collide with the body of the vehicle 9, i.e. the body of the vehicle 9 serves as a stop element, and when the mudguard 5 collides with the body of the vehicle 9 and the wheel 1 keeps turning, the flexible structure in the fastening support 6 yields. Such a stop element solution naturally requires that the mudguard 5 should be sufficiently strong and robust. Furthermore, the body of the vehicle 9 must be sufficiently strong at the point where the mudguard 5 hits the vehicle 9. For example, the side panel of a tractor may be provided e.g. with a piece of plastics for strength. The rigidity of the flexible structure is also adapted to yield early enough so as to prevent the mudguard 5 and the body of the vehicle 9 from being damaged.

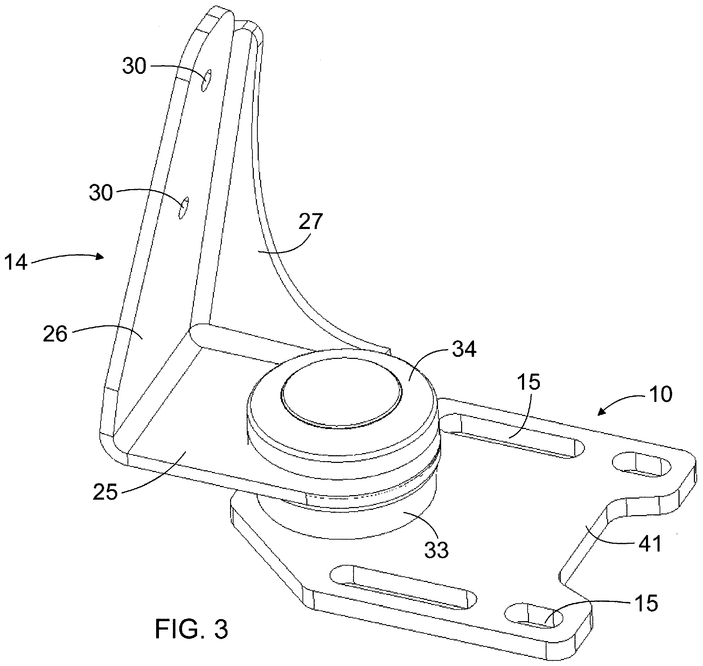

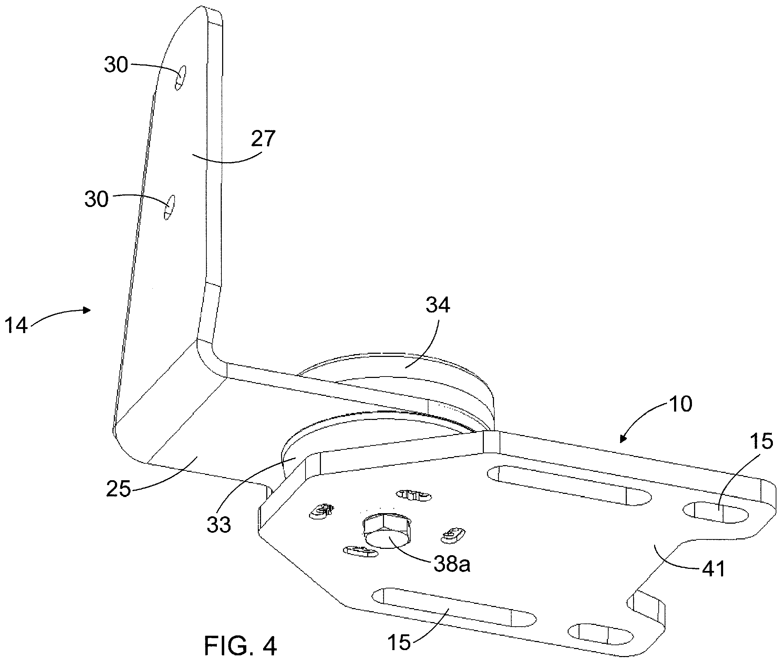

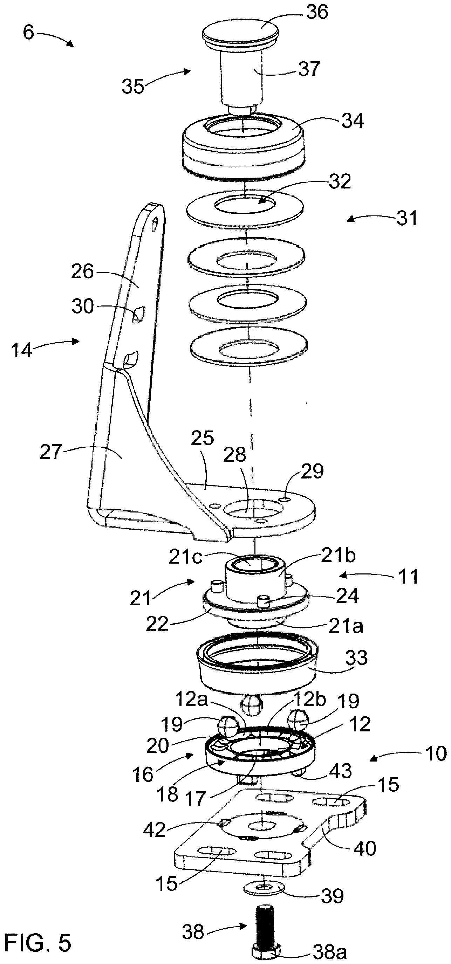

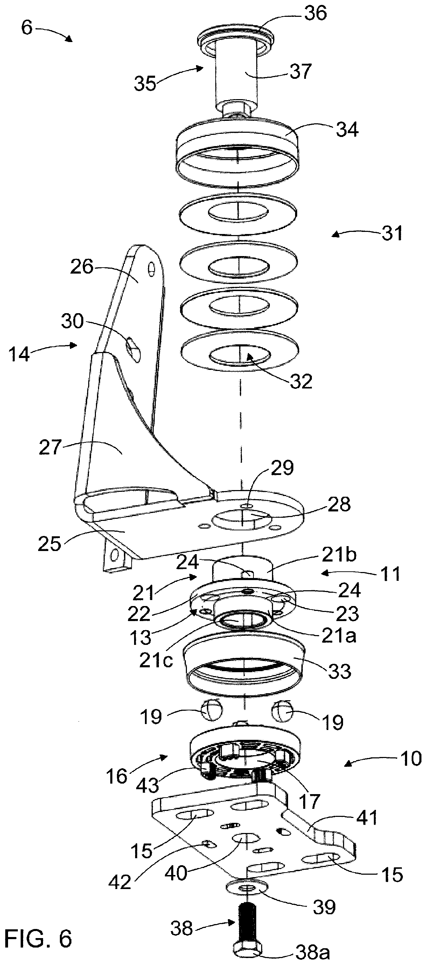

In the following a structure and an operation of the fastening support 6 for the mudguard 5 is explained in detail, referring to Figures 3 to 6, wherein Figure 3 shows schematically a view of a fastening support for a mudguard as seen obliquely from above, Figure 4 shows schematically a view of the fastening support of Figure 3 as seen obliquely from below; Figure 5 shows schematically an exploded view of a fastening support similar to that of Figure 3 as seen obliquely from above and Figure 6 shows schematically an exploded view of the fastening support of Figure 5 as seen obliquely from below.

The fastening support 6 comprises a support element 10, which is arranged or fastened fixedly in connection with the hub 2 of the wheel 1 to move therewith. The support element 10 comprises a first turning support surface 12.

Further the fastening support 6 comprises a turning element 11 arranged coaxially with the support element 10. The turning element 11 comprising a second turning support surface 13 which is arranged coaxially opposite to the first turning support surface 12 in the support element 10, i.e. facing towards the first turning support surface 12 in the support element 10. The turning element 11 and the second turning support surface 13 therein and the support element 10 and the first turning support surface 12 therein are able to turn relative to each other when the wheel 1 turns at an angle larger than the aforementioned given turning angle.

Further the fastening support 6 comprises a fastening element 14 of the mudguard 5. The fastening element 14 is supported to the turning element 11 coaxially with the support element 10 and the turning element 11 such that the fastening element 14 is substantially immobile relative to the turning element 11 in the turning direction of the turning element 11 relative to the support element 10, whereby the fastening element 14 is arranged to turn along with the turning element 11 relative to the support element 10 coaxially with the turning element 11 when the wheel 1 turns at an angle larger than the aforementioned given turning angle.

The support element 10 comprises is a plate element 41 which is fastened fixedly to the hub 2 of the wheel 1, for example by bolts arranged through fastening openings 15 arranged in the plate element 41. The support element 10 comprises further a ring-shaped projecting part 16 above the plate element 41, an upper surface of which comprises the first turning support surface 12, an opening 17 or a recess 17 remaining in the middle of the ring-shaped projecting part 16. The first turning support surface 12 comprises a number of recesses 18, in the embodiment of Figures 3 to 6, altogether three recesses 18, arranged at a distance from each other in the ring-shaped direction of the first turning support surface 12. Next to the recesses 18, on both sides of the recesses 18, there are inclined or sloping surfaces 12a, 12b which are arranged to rise in a direction away from the recesses 18, meaning that the level of the inclined surfaces 12a, 12b is lower next to the recesses 18 than farther off from the recesses 18. Balls 19 are inserted into the recesses 18 when the fastening support 6 is put together, which balls 19 are allowed to exit or leave the recesses 18 and rise up on the inclined surfaces 12a, 12b when the wheel 1 turns to the angle larger that the given turning angle of the mudguard 5, as explained in detail later. At the farthest ends of the inclined surfaces 12a, 12b away from the recesses 18 there are service position recesses 20, to which position the balls 19 will move when the mudguard 5 is turned into a diagonal position for service purposes.

In the support element 10 disclosed the ring-shaped projecting part 16 comprises mounts 43 extending towards the plate element 41, and the plate element 41 comprises openings 42 to receive the mounts 43 of the ring-shaped projecting part 16 when the fastening support 6 of the mudguard 5 is put together. The mounts 43 in the ring-shaped projecting part 16 and the openings 42 in the plate element 41 provide a form interlocking between the plate element 41 and the ring-shaped projecting part 16 so that they are not able to turn relative to each other but are allowed to be separated from each other by lifting the ring-shaped projecting part 16 relative to the plate element 41. Alternatively the ring-shaped projecting part 16 could be fastened fixedly to the plate element 41.

The turning element 11 is a sleeve element comprising a hollow rotationally symmetric sleeve part 21 defining an axial direction of the turning element 11 and defining a cylindrical opening 21c inside the sleeve part 21. Further the turning element 11 comprises a rotationally symmetric flange part 22 arranged at the outer circumference of the sleeve part 21. The flange part 22 is arranged between the extreme ends of the sleeve part 21 so that the sleeve part 21 comprises a first sleeve part portion 21a extending from the flange part 22 towards the support element 10 and a second sleeve part portion 21b extending from the flange part 22 towards the fastening plate 14. The lower surface of the flange part 22, i.e. the surface of the flange part 22 facing towards the support element 10, comprises the second turning support surface 13. The second turning support surface 13 is otherwise a substantially even surface but comprises recesses 23 for receiving the balls 19 when the fastening support 6 is put together. The recesses 23 in the turning element 11 are positioned mutually similarly as the recesses 18 in the support element 10. Further the turning element 11 comprises pins 24 projecting upwards from the flange part 22, i.e. towards the fastening plate 14, which pins 24 are used to provide a form locking between the turning element 11 and the fastening plate 14 preventing the turning of the fastening plate 14 relative to the turning element 11 in the turning direction of the turning element 11 relative to the support element 10.

The sleeve part 21 and the flange part 22 of the turning element 11 may be manufactured as a uniform piece in a simple way by machining for example a hollow sleeve billet and thereafter separately attaching the pins 24 in the flange part 22.

The fastening plate 14 of the mudguard 5 is a plate element comprising a first plate portion 25, i.e. a horizontal first plate portion 25 that is arranged coaxially with the turning element 11 and the support element 10. The fastening plate 14 comprises further a second plate portion 26 that is arranged to extend upwards from the horizontal first plate portion 25, i.e. an upward second plate portion 26. The fastening plate 14 may also comprise a third plate portion 27, as shown in Figures 3 to 6, which connects the horizontal first plate portion 25 and the upward second plate portion 26, thus providing a supporting structure between the horizontal first plate portion 25 and the upward second plate portion 26.

The horizontal first plate portion 25 of the fastening plate 14 comprises an opening 28 arranged to receive the second sleeve part portion 21b of the turning element 11 when the fastening support 6 is put together. Further the horizontal first plate portion 25 comprises, around the opening 28, another openings 29, the number, size and the mutual position of the openings 29 corresponding to the number, size and the mutual position of the pins 24 in the turning element 11.

A bottom surface of the horizontal first plate portion 25 around the opening 28 provides a support surface through which the fastening element 14 of the mudguard 5 is supported against the turning element 11 in the axial direction of the turning element 11 when the fastening support 6 is put together. The upward second plate portion 26, in turn, provides an extension in connection with which the mudguard 5 is to be fastened when the mudguard 5 is fastened to the fastening support 6, the upward second plate portion 26 providing fastening openings 30 for that purpose. Depending on an actual implementation of the fastening element 14 and the mudguard 5, for example depending on a design and dimensioning of the fastening element 14 and the mudguard 5, the mudguard 5 may be fastened to the fastening element 14 either directly or through a separate fastening rod (not shown).

The fastening element 14 may be manufactured in a simple way for example by pressing, after which the openings 28, 29 and 30 may be provided through the respective plate portions 25, 26.

The fastening support 6 comprises further a spring element 31 provided with a central opening 32. The spring element 31 may be for example a cup spring, as shown in Figures 5 and 6, or a coil spring. The spring element 31 is arranged to press, in the axial direction of the turning element, the fastening element 14 towards the turning element 11, and the fastening element 14 together with the turning element 11 towards the support element 10 when the fastening support 6 is put together.

The fastening support 6 is put together as follows. The balls 19 are inserted into the recesses 18 in the first turning support surface 12 in the ring-shaped projecting part 16 of the support element 10. Thereafter the turning element 11 is placed above the support element 10 in such a way that the first sleeve portion 21a of the turning element 11 is inserted into the opening 17 in the middle of the ring-shaped projecting part 16 in such a position that the upper portions of the balls 19 remain in the recesses 23 in the second turning support surface 13 in the flange part 22 of the turning element 11. The first sleeve portion 21a of the turning element 11, which is inserted into the opening in the middle of the ring-shaped projecting part 16, centralize the support element 10 and the turning element 11 in such a way that the support element 10 and the turning element 11 are coaxial, as well as the first turning support surface 12 in the support element 10 and the second turning support surface 13 in the turning element 11 are coaxial. Further a first protective casing 33 may be arranged around the ring-shaped projecting part 16 in the support element 10 and the lower part of the turning element 11 to prevent dirt entering between the first 12 and second 13 turning support surfaces.

The fastening element 14 is thereafter arranged above the turning element 11 such that the bottom surface of the horizontal first plate portion 25 rests against an upper surface of the flange part 22 of the turning element 11, and the pins 24 in the flange part 22 of the turning element 11 are inserted through the openings 29 in the horizontal first plate portion 25. Preferably the second sleeve part portion 21b extends into the opening 28 in the fastening element 14, centralizing the fastening element 14 with the support element 10 and the turning element 11 such that the fastening element 14, the support element 10 and the turning element 11 are coaxial. The openings 29 in the horizontal first plate portion 25 and the pins 24 in the flange part 22 of the turning element 11 inserted through the openings 29 in the horizontal first plate portion 25 together provide a form locking which prevent the fastening element 14 to turn relative to the turning element 11. They may also take part in the centralizing of the fastening element 14 with the support element 10 and the turning element 11.

Other kind of form interlocking may also be provided between the fastening element 14 and the turning element 11. The form interlocking between the fastening element 14 and the turning element 11 may also be provided for example by providing projections at an outer circumference of the sleeve part 21 of the turning element 11, especially at an outer circumference of the second sleeve part portion 21b of the sleeve part of the turning element 11, and by providing recesses at an inner circumference of the opening 28 in the horizontal first plate portion 25 of the fastening element 14 or in a lower surface of the horizontal first plate portion 25 of the fastening element 14, which recesses have a shape and size which correspond to a shape and size of the projections at the outer circumference of the sleeve part 21 of the turning element 11.

The spring element 31 is laid above the horizontal first plate portion 25 of the fastening element 14 such that the central opening 32 of the spring element 31 is coaxial with the opening 17 in the support element 10, the sleeve part 21 of the turning element 11 and the opening 28 in the horizontal first plate portion 25 of the fastening element 14. Preferably the second sleeve part portion 21b of the turning element 11 extends into the central opening 32 in the spring element 31, centralizing the spring element 31 with the support element 10, the turning element 11 and the fastening element 14, such that they all are coaxial. A second protective casing 34 may be arranged around the spring element 31 to prevent dirt entering into the spring element 31.

The support element 10, the turning element 11, the fastening element 14 and the spring element 31 as well as possibly additional protective casings 33, 34 are fastened together with a through-bolt coupling extending in the axial direction of the turning element 11 through the central opening 32 in the spring element 31, the opening 28 in the horizontal first plate portion 25 of the fastening element 14, through the cylindrical opening 21c inside the sleeve part 21 of the turning element 11 and an opening 40 in the plate element 41 at the opening 17 in the ring-shaped projecting part 16, which opening 40 in the plate element 41 is open to the opening 17 in the ring-shaped projecting part 16. The through-bolt coupling in the embodiment of Figures 3 to 6 comprises a nut 35 provided with a flange-like head part 36 and a projecting part 37 provided with an internal threading and extending at least partly through at least one of the central opening 32 in the spring part 31, the opening 28 in the fastening element 14, the cylindrical opening 21c inside the sleeve part 21 of the turning element 11, the opening 17 in the ring-shaped projecting part 16 and the opening 40 in the support element 10. Further the through-bolt coupling in the embodiment of Figures 3 to 6 comprises a bolt 38 provided with an external threading. The bolt 38 is inserted through the opening 40 in the support element 10, i.e. from below of the support element 10, whereby the external threading in the bolt 38 becomes in contact with the internal threading in the nut 35. A washer 39 may be placed between the support element 10 and a head 38a of the bolt 38. When the tightening of the through-bolt coupling takes place from under the support element 10, the head 38a of the bolt 38 remains at the lower part of the fastening support 6 under the support element 10, and does not require any space on the upper side of the fastening support 6 when the fastening support 6 is fastened in connection with the hub 2 of the wheel 1.

The spring element 31 presses the fastening element 14 downward towards the turning element 11. The spring element 31 presses also the fastening element 14 together with the turning element 11 downward towards the support element 10. A spring force provided by the spring element 31, which may also be affected to by an amount of tightening of the through-bolt coupling, is dimensioned in such a manner that when the wheel 1 turns at an angle smaller than the given turning angle, the support element 10, the turning element 11, the fastening element 14 and the mudguard 5 fastened in connection with the fastening element 14 all remain stationary relative to each other and turn along with the turning of the hub 2 of the wheel 1, following the turning angle of the wheel 1. However, the spring force provided by the spring element 31 is dimensioned in such a manner that when the wheel 1 turns at an angle larger than the given turning angle, a spring force provided by the spring element 31 is high enough to press the turning element 11 downward in such a manner that the balls 19 are forced out of the recesses 18 in the first turning support surface 12 of the support element 10 onto the respective inclined surfaces 12a, 12b in the first turning support surface 12 next to the recesses 18 by a force directed to the balls 19 by the turning element 11 and the recesses 23 therein in the ring-shaped direction of the first 12 and the second 13 turning support surfaces. Thereby the balls 19 remain between the respective inclined surfaces 12a, 12b and the recesses 23 in the second turning support surface 13 in the turning element 11 against the spring force provided by the spring element 31. Thereby the turning element 11, the fastening element 14 and the mudguard 5 fastened in connection with the fastening element 14 all remain stationary relative to each other at the maximum turning angle allowed for the mudguard 5, but the support element 10 together with the wheel 1 and the hub 2 are allowed to turn to an angle that is larger than the maximum turning angle allowed for the mudguard 5.

When the wheel 1 is turned back so that the angle of the wheel 1 is smaller than the given maximum turning angle allowed for the mudguard 5, the spring force provided by the spring 31 together with the descending surfaces of the respective inclined surfaces 12a, 12b towards the recesses 18 in the first turning support surface 12 cause the balls 19 to return back to the recesses 18 in the first turning support surface 12, whereby the turning element 11, the fastening element 14 and the mudguard 5 fastened in connection with the fastening element 14 return to follow the turning of the support element 10, which follows the turning of the wheel 1 and the hub 2 along with the wheel 1.

In the embodiment disclosed above, the balls 19 taking part in the relative turning between the support element 10 and the turning element 11 may be considered to provide a part of the second turning support surface 13 because they move with the second turning support surface 13 provided in the turning element 11, when the turning element 11 turns relative to the support element 10. Alternatively the balls 19 could provide a part of the first turning support surface 12 and to move with the first turning support surface 12 relative to the turning element 11, whereby the inclined or sloped surfaces disclosed in the embodiment shown in Figures 5 and 6 would be implemented in the second turning support surface 13. Furthermore, an embodiment comprising no balls 19 at all is also useable, whereby the relative turning between the support element 10 and the turning element 11 could be implemented with first and second turning support surfaces that comprise mutually correspondingly shaped projections and recesses.

The assembly or putting together of the fastening support 6 disclosed is very simple and effective, because the support element 10, the turning element 11, the fastening element 14 and the spring element 31 are supported to each other coaxially, and may be tightened together with only a single through-bolt coupling extending along a common axis of the support element 10, the turning element 11, the fastening element 14 and the spring element 31. This means that the assembly and disassembly of the fastening support 6 is very fast. Additionally, a height of the common structure of the spring element 31, the horizontal first plate portion 25 of the fastening element 14, the turning element 11 and the support element 10 may remain very low, whereby those parts of the fastening support 6 may remain inside a rim of the wheel 1, if the fastening support 6 is fastened to an axle knuckle in a tractor, for example. Furthermore, in the fastening support 6 presented above the turning element 11 and the fastening element 14 are simple to manufacture compared to casted pieces used in some prior art solutions.

According to an embodiment the second sleeve part portion 21b of the turning element 11 could be arranged to extend through the opening 28 in the horizontal first plate portion 25 of the fastening element 14 and through the central opening 32 in the spring element 31 and be provided with an external threading. The first sleeve part portion 21a of the turning element 11 could be arranged to extend through the opening 17 in the ring-shaped projecting part 16 and through the opening 40 in the plate element 41 and be provided with an external threading too. The parts in the fastening support 6 could thereby be fastened together with for example hex nuts arranged to co-operate with the threading at the opposite ends of the turning element 11, the tightening of the parts of the fastening support 6 being now determined by the nut arranged at the upper part of the fastening support 6.

## Claims

1. A fastening support (6) for a mudguard (5) to enable the mudguard (5) to be fastened in connection with a hub (2) of a turning wheel (1) such that as the wheel (1) turns at an angle smaller than a given turning angle, the mudguard (5) turns along with the wheel (1) accordingly, the fastening support comprising a flexible structure that allows the mudguard (5) being prevented from turning along with the wheel (1) at an angle larger than the given turning angle and being returned to turn along with the wheel (1) when the turning angle of the wheel (1) is smaller than the aforementioned given turning angle, the fastening support (6) comprising
a support element (10) to be arranged fixedly in connection with the hub (2) of the wheel (1) to move therewith,
a turning element (11) arranged coaxially with the support element (10), and
a fastening element (14) of the mudguard (5) supported to the turning element (11) and being substantially immobile relative to the turning element (11) in the turning direction of the turning element (11) relative to the support element (10),
**characterized in that**
the support element (10) comprises a first turning support surface (12),
the turning element (11) comprises a second turning support surface (13) arranged coaxially opposite to the first turning support surface (12) in the support element (10), the turning element (11) and the second turning support surface (13) therein and the support element (10) and the first turning support surface (12) therein being able to turn relative to each other when the wheel (1) turns at an angle larger than the aforementioned given turning angle, and that
the fastening element (14) of the mudguard (5) is supported to the turning element (11) coaxially with the support element (10) and the turning element (11) and being arranged to turn along with the turning element (11) relative to the support element (10) coaxially with the turning element (11) when the wheel (1) turns at an angle larger than the aforementioned given turning angle.

2. A fastening support as claimed in claim 1, wherein the fastening element (14) of the mudguard (5) is supported to the turning element (11) with a form interlocking between the fastening element (14) of the mudguard (5) and the turning element (11) such that the fastening element (14) of the mudguard (5) is substantially immobile relative to the turning element (11) in the turning direction of the turning element (11) relative to the support element (10).

3. A fastening support as claimed in claim 1 or 2, wherein the fastening support (6) comprises a spring element (31) that is coaxial with the support element (10), the spring element (31) being arranged to press the turning element (11) and the fastening element (14) supported thereto towards the support element (10).

4. A fastening support as claimed in claim 3, wherein the turning element (11) is arranged above the support element (10), the fastening element (14) is arranged above the turning element (11) and the spring element (31) is arranged above the fastening element (14), whereby the spring element (31) is also arranged to press the fastening element (14) against the turning element (11).

5. A fastening support as claimed in any one of the preceding claims, wherein the support element (10), the turning element (11), the fastening element (14) and the spring element (31) comprise coaxial openings (21c, 28, 32, 40) so that the support element (10), the turning element (11), the fastening element (14) and the spring element (31) may be put together with a single through-bolt coupling arranged to extend through the openings (21c, 28, 32, 40).

6. A fastening support as claimed in claim 5, wherein a head (38a) of the bolt (38) in the single through-bolt coupling is arranged at a lower part of the fastening support (6) under the support element (10).

7. A fastening support as claimed in any one of the preceding claims, wherein the support element (10) comprises a plate element (41) and a ring-shaped projecting part (16) defining an opening (17) in the middle of the projecting part (16), an upper surface of the ring-shaped projecting part (16) comprising the first turning support surface (12).

8. A fastening support as claimed in any one of the preceding claims, wherein the fastening element (14) is a plate element comprising at least a horizontal first plate portion (25) provided with an opening (28) and an upward second plate portion (26) in connection with which the mudguard (5) is to be fastened.

9. A fastening support as claimed in any one of the preceding claims, wherein the turning element (11) is a sleeve element comprising a hollow rotationally symmetric sleeve part (21) defining an axial direction of the turning element (11) and a rotationally symmetric flange part (22) arranged at an outer circumference of the sleeve part (21), a lower surface of the flange part (22) being provided with the second turning support surface (13).

10. A fastening support as claimed in claim 9, wherein the flange part (22) is arranged, in the axial direction of the turning element (11), between extreme ends of the sleeve part (21) so that the sleeve part (21) comprises a first sleeve part portion (21a) to be arranged to extend from the flange part (22) towards the support element (10) and a second sleeve part portion (21b) to be arranged to extend from the flange part (22) towards the fastening element (14).

11. A fastening support as claimed in any one of the preceding claims, wherein the spring element (31) is a cup spring provided with a central opening (32) or a coil spring provided with a central opening (32).

12. A fastening support as claimed in any one of the preceding claims, wherein at least a portion (21a, 21b) of the sleeve part (21) of the turning element (11) is arranged to extend into the opening (17) in the support element (10), into the opening (28) in the horizontal first plate portion (25) of the fastening element (14) and into the central opening (32) of the spring element (31) so as to centralize the support element (10), the turning element (11), the fastening element (14) and the spring element (31).

## Patentansprüche

1. Befestigungsträger (6) für einen Kotflügel (5), der es ermöglicht, den Kotflügel (5) in Verbindung mit einer Nabe (2) eines sich drehenden Rades (1) so zu befestigen, dass, wenn sich das Rad (1) in einem Winkel dreht, der kleiner ist als ein vorgegebener Drehwinkel, sich der Kotflügel (5) zusammen mit dem Rad (1) entsprechend dreht, wobei der Befestigungsträger eine flexible Struktur umfasst, die zulässt, dass verhindert wird, dass sich der Kotflügel (5) zusammen mit dem Rad (1) in einem Winkel dreht, der größer ist als der vorgegebene Drehwinkel, und sich wieder zusammen mit dem Rad (1) dreht, wenn der Drehwinkel des Rades (1) kleiner ist als der vorgegebene Drehwinkel, wobei der Befestigungsträger (6) umfasst:
ein Trage-Element (10), das in fester Verbindung mit der Nabe (2) des Rades (1) angeordnet ist und sich damit bewegt,
ein Dreh-Element (11), das koaxial zu dem Trage-Element (10) angeordnet ist, und
ein Befestigungs-Element (14) des Kotflügels (5), das von dem Dreh-Element (11) getragen wird und im Wesentlichen stationär relativ zu dem Dreh-Element (11) in der Drehrichtung des Dreh-Elementes (11) relativ zu dem Trage-Element (10) ist,
**dadurch gekennzeichnet, dass**
das Trage-Element (10) eine erste Dreh-Tragefläche (12) umfasst,
das Dreh-Element (11) eine zweite Dreh-Tragefläche (13) umfasst, die koaxial entgegengesetzt zu der ersten Dreh-Tragefläche (12) an dem Trage-Element (10) angeordnet ist, wobei das Dreh-Element (11) und die zweite Dreh-Tragefläche (13) daran sowie das Trage-Element (10) und die erste Dreh-Tragefläche (12) daran sich relativ zueinander drehen können, wenn sich das Rad (11) in einem Winkel dreht, der größer ist als der vorgegebene Drehwinkel, und dadurch, dass
das Befestigungs-Element (14) des Kotflügels (5) von dem Dreh-Element (11) koaxial zu dem Trage-Element (10) und dem Dreh-Element (11) getragen wird und so eingerichtet ist, dass es sich zusammen mit dem Dreh-Element (11) relativ zu dem Trage-Element (10) koaxial zu dem Dreh-Element (11) dreht, wenn sich das Rad (1) in einem Winkel dreht, der größer ist als der vorgegebene Drehwinkel.

2. Befestigungsträger nach Anspruch 1, wobei das Befestigungselement (14) des Kotflügels (5) von dem Dreh-Element (11) mit einem formschlüssigen Eingriff zwischen dem Befestigungs-Element (14) des Kotflügels (5) und dem Dreh-Element (11) getragen wird, so dass das Befestigungs-Element (14) des Kotflügels (5) relativ zu dem Dreh-Element (11) in der Drehrichtung des Dreh-Elementes (11) relativ zu dem Trage-Element (10) im Wesentlichen stationär ist.

3. Befestigungsträger nach Anspruch 1 oder 2, wobei der Befestigungsträger (6) ein Feder-Element (31) umfasst, das koaxial zu dem Trage-Element (10) ist, und das Feder-Element (31) so eingerichtet ist, dass es das Dreh-Element (11) sowie das von ihm getragene Befestigungs-Element (14) auf das Trage-Element (10) zu drückt.

4. Befestigungsträger nach Anspruch 3, wobei das Dreh-Element (11) über dem Trage-Element (10) angeordnet ist, dass Befestigungs-Element (14) über dem Dreh-Element (11) angeordnet ist und das Feder-Element (31) über dem Befestigungs-Element (14) angeordnet ist, so dass das Feder-Element (31) auch so eingerichtet ist, dass es das Befestigungs-Element (14) an das Dreh-Element (11) drückt.

5. Befestigungsträger nach einem der vorangehenden Ansprüche, wobei das Trage-Element (10), das Dreh-Element (11), das Befestigungs-Element (14) und das Feder-Element (31) koaxiale Öffnungen (21c, 28, 32, 40) umfassen, so dass das Trage-Element (10), das Dreh-Element (11), das Befestigungs-Element (14) und das Feder-Element (31) mit einer einzelnen Durchgangs-Schraubverbindung zusammengesetzt werden können, die sich durch die Öffnungen (21c, 28, 32, 40) hindurch erstreckt.

6. Befestigungsträger nach Anspruch 5, wobei ein Kopf (38a) der Schraube (38) in der einzelnen Durchgangs-Schraubverbindung an einem unteren Teil des Befestigungsträgers (6) unter dem Trage-Element (10) angeordnet ist.

7. Befestigungsträger nach einem der vorangehenden Ansprüche, wobei das Trage-Element (10) ein Platten-Element (41) sowie einen ringförmigen Vorsprungsteil (16) umfasst, der eine Öffnung (17) in der Mitte des Vorsprungsteils (16) aufweist, und eine obere Fläche des ringförmigen Vorsprungsteils (16) die erste Dreh-Tragefläche (12) umfasst.

8. Befestigungsträger nach einem der vorangehenden Ansprüche, wobei das Befestigungs-Element (14) ein Platten-Element ist, das wenigstens einen horizontalen ersten Plattenabschnitt (25), der mit einer Öffnung (28) versehen ist, sowie einen nach oben gerichteten zweiten Plattenabschnitt (26) umfasst und der Kotflügel (5) in Verbindung damit befestigt ist.

9. Befestigungsträger nach einem der vorangehenden Ansprüche, wobei das Dreh-Element (11) ein Buchsen-Element ist, das einen hohlen rotationssymmetrischen Buchsen-Teil (21), der eine axiale Richtung des Dreh-Elementes (11) bestimmt, sowie einen rotationssymmetrischen Flansch-Teil (22) umfasst, der an einem Außenumfang des Buchsen-Teils (21) angeordnet ist, und eine untere Fläche des Flansch-Teils (22) mit der zweiten Dreh-Tragefläche (13) versehen ist.

10. Befestigungsträger nach Anspruch 9, wobei der Flansch-Teil (22) in der axialen Richtung des Dreh-Elementes (11) zwischen äußersten Enden des Buchsen-Teils (21) angeordnet ist, so dass der Buchsenteil (21) einen ersten Abschnitt (21a) des Buchsen-Teils, der so angeordnet wird, dass er sich von dem Flansch-Teil (22) auf das Trage-Element (10) zu erstreckt, und einen zweiten Abschnitt des Buchsen-Teils (21b) umfasst, der so angeordnet ist, dass er sich von dem Flanschteil (22) auf das Befestigungs-Element (14) zu erstreckt.

11. Befestigungsträger nach einem der vorangehenden Ansprüche, wobei das Feder-Element (31) eine Tellerfeder, die mit einer mittigen Öffnung (32) versehen ist, oder eine Schraubenfeder ist, die mit einer mittigen Öffnung (32) versehen ist.

12. Befestigungsträger nach einem der vorangehenden Ansprüche, wobei wenigstens ein Abschnitt (21a, 21b) des Buchsen-Teils (21) des Dreh-Elementes (11) so angeordnet ist, dass er sich in die Öffnung (17) in dem Trage-Element (10), in die Öffnung (28) in dem horizontalen ersten Plattenabschnitt (25) des Befestigungs-Elementes (14) sowie in die mittige Öffnung (32) des Feder-Elementes (31) hinein erstreckt, um so das Trage-Element (10), das Dreh-Element (11), das Befestigungs-Element (14) und das Feder-Element (31) zu zentrieren.

## Revendications

1. Support de fixation (6) pour un garde-boue (5) destiné à autoriser la fixation du garde-boue (5) en relation avec le moyeu (2) d'une roue (1) en rotation, de sorte à ce que la roue (1) tourne à un angle plus petit qu'un angle de rotation donné, le garde-boue (5) tournant en conséquence en même temps que la roue (1), le support de fixation comprenant une structure souple qui permet au garde-boue (5) de ne pas pouvoir tourner en même temps que la roue (1) à un angle plus grand que l'angle de rotation donné et de pouvoir tourner de nouveau en même temps que la roue (1) lorsque l'angle de rotation de la roue (1) est plus petit que l'angle de rotation donné mentionné ci-dessus, le support de fixation (6) comprenant :
un élément de support (10) à agencer de manière fixe en relation avec le moyeu (2) de la roue (1) pour se déplacer avec celle-ci,
un élément tournant (11) disposé de façon coaxiale avec l'élément de support (10), et
un élément de fixation (14) du garde-boue (5) supporté sur l'élément tournant (11) et pratiquement immobile par rapport à l'élément tournant (11) dans la direction de rotation de l'élément tournant (11) par rapport à l'élément de support (10),
**caractérisé en ce que**
l'élément de support (10) comprend une première surface de support tournant (12),
l'élément tournant (11) comprend une seconde surface de support tournant (13) disposée de façon coaxiale à l'opposé de la première surface de support tournant (12) dans l'élément de support (10), l'élément tournant (11) et la seconde surface de support tournant (13) dans celui-ci ainsi que l'élément de support (10) et la première surface de support tournant (12) dans celui-ci pouvant tourner l'un par rapport à l'autre lorsque la roue (1) tourne à un angle plus grand que l'angle de rotation donné mentionné ci-dessus, et **en ce que**
l'élément de fixation (14) du garde-boue (5) est supporté sur l'élément tournant (11) de façon coaxiale avec l'élément de support (10) et l'élément tournant (11), et il est agencé pour tourner en même temps que l'élément tournant (11) par rapport à l'élément de support (10) de façon coaxiale avec l'élément tournant (11) lorsque la roue (1) tourne à un angle plus grand que l'angle de rotation donné mentionné ci-dessus.

2. Support de fixation selon la revendication 1, dans lequel l'élément de fixation (14) du garde-boue (5) est supporté sur l'élément tournant (11) en présentant une forme autorisant un verrouillage réciproque entre l'élément de fixation (14) du garde-boue (5) et l'élément tournant (11) de sorte à ce que l'élément de fixation (14) du garde-boue (5) soit pratiquement immobile par rapport à l'élément tournant (11) dans la direction de rotation de l'élément tournant (11) par rapport à l'élément de support (10).

3. Support de fixation selon la revendication 1 ou la revendication 2, le support de fixation (6) comprenant un élément de ressort (31) qui est coaxial avec l'élément de support (10), l'élément de ressort (31) étant agencé pour presser l'élément tournant (11) et l'élément de fixation (14) supporté sur celui-ci vers l'élément de support (10).

4. Support de fixation selon la revendication 3, dans lequel l'élément tournant (11) est agencé au-dessus de l'élément de support (10), l'élément de fixation (14) est agencé au-dessus de l'élément tournant (11) et l'élément de ressort (31) est agencé au-dessus de l'élément de fixation (14), grâce à quoi l'élément de ressort (31) est également agencé pour presser l'élément de fixation (14) contre l'élément tournant (11).

5. Support de fixation selon l'une quelconque des revendications précédentes, dans lequel l'élément de support (10), l'élément tournant (11), l'élément de fixation (14) et l'élément de ressort (31) comprennent des ouvertures coaxiales (21c, 28, 32, 40) de sorte à ce que l'élément de support (10), l'élément tournant (11), l'élément de fixation (14) et l'élément de ressort (31) puissent être disposés ensemble avec un couplage unique à boulon traversant disposé pour s'étendre au travers des ouvertures (21c, 28, 32, 40).

6. Support de fixation selon la revendication 5, dans lequel la tête (38a) du boulon (38) dans le couplage unique à boulon traversant est agencée au niveau de la partie inférieure du support de fixation (6) sous l'élément de support (10).

7. Support de fixation selon l'une quelconque des revendications précédentes, dans lequel l'élément de support (10) comprend un élément de plaque (41) et un composant saillant en forme de bague (16) définissant une ouverture (17) au milieu du composant saillant, la surface supérieure du composant saillant en forme de bague (16) comprenant la première surface de support tournant (12).

8. Support de fixation selon l'une quelconque des revendications précédentes, dans lequel l'élément de fixation (14) est un élément de plaque comprenant au moins une première partie de plaque horizontale (25) munie d'une ouverture (28) et une seconde partie de plaque vers le haut (26) en relation avec laquelle le garde-boue (5) doit être fixé.

9. Support de fixation selon l'une quelconque des revendications précédentes, dans lequel l'élément tournant (11) est un élément de manchon comprenant un composant formant manchon creux symétrique en rotation (21) définissant la direction axiale de l'élément tournant (11) et un composant de collerette symétrique en rotation (22) agencé au niveau de la circonférence externe du composant de manchon (21), la surface inférieure du composant de collerette (22) étant disposée avec la seconde surface de support tournant (13).

10. Support de fixation selon la revendication 9, dans lequel le composant de collerette (22) est agencé, dans la direction axiale de l'élément tournant (11), entre les extrémités du composant de manchon (21), de sorte à ce que le composant de manchon (21) comprenne une première partie de composant de manchon (21a) devant être agencée pour s'étendre depuis le composant de collerette (22) vers l'élément de support (10) et une seconde partie de composant de manchon (21b) devant être agencée pour s'étendre depuis le composant de collerette (22) vers l'élément de fixation (14) .

11. Support de fixation selon l'une quelconque des revendications précédentes, dans lequel l'élément de ressort (31) est une rondelle - ressort dotée d'une ouverture centrale (32) ou bien un ressort hélicoïdal doté d'une ouverture centrale (32).

12. Support de fixation selon l'une quelconque des revendications précédentes, dans lequel au moins une partie (21a, 21b) du composant de manchon (21) de l'élément tournant (11) est agencée pour s'étendre dans l'ouverture (28) ménagée dans la première partie de plaque horizontale (25) de l'élément de fixation (14) et dans l'ouverture centrale (32) de l'élément de ressort (31) de sorte à centrer l'élément de support (10), l'élément tournant (11), l'élément de fixation (14) et l'élément de ressort (31).
